# EUROPEAN PATENT APPLICATION

(11) **EP 0 798 707 A2**
(43) Date of publication of application: **01.10.1997**
(21) Application number: 97104588.5
(22) Date of filing: 18.03.1997
(51) Int. Cl.: G11B 7/24, G11B 7/095

(54) **Optical disc**

(30) Priority: 29.03.1996 JP 103402/96
(71) Applicant: PIONEER ELECTRONIC CORPORATION, Meguro-ku Tokyo (JP)
(72) Inventor: Kurihara, Toshihiko, Tokorozawa-city, Saitama (JP)
(74) Representative: Klingseisen, Franz, Dipl.-Ing.

(57) **Abstract**

An optical disc comprises; a pit-train region having a read-in zone, a program zone and a read-out zone which are disposed outwards in turn on a data-recorded-surface; and a margin zone at an outer periphery of the pit-train region e.g., a label space. Pits are recorded on the disc in such a manner that a width of the pit-train region in a radial direction of the optical disc is larger than a diameter of a tilt-sensing light beam spot formed and used for a tilt-servo adjustment of an incline angle between an optic axis of a data-reading light beam and the data-recorded-surface.

## Description

### BACKGROUND OF THE INVENTION

### 1. Field of the Invention

The present invention relates to an optical disc having a recording track.

### 2. Description of the Related Art

There are recently known optical discs such as a compact disc i.e., CD, a video disc e.g., LD, CD-ROM, a magneto-optical disc i.e., MO or the like in the world. (These optical discs are simply referred to herein as a "disc")

To achieve the acquisition of high quality of recorded information from the video disc of LD or the like, the optical disc reproducing device employs the so-called tilt-servo technology in which the optic axis of the optical pickup device is kept perpendicularly to the reflective surface in the radial direction of the disc.

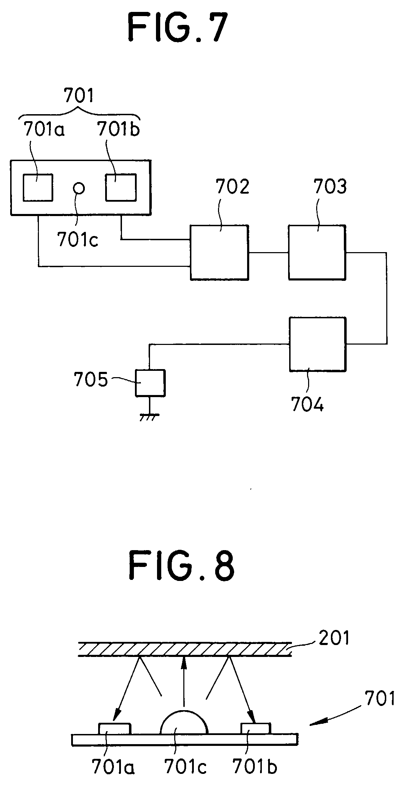

Fig. 7 shows a block diagram of the tilt-servo mechanism. In the figure, numeral reference 701 denotes a tilt-sensor, numeral reference 702 denotes an error amplifier, numeral reference 703 denotes a mechanism controller, numeral reference 704 denotes a driving-circuit, and numeral reference 705 denotes a driving-motor.

The tilt-sensor 701 includes a light emitter 701c of a LED (light emitting diode ), two photo-detectors 701a and 701b. In the operation of the tilt-sensor 701, as shown in the Fig. 8, the light emitter 701c emits and irradiates a light beam onto an optical disc 201 and then the photo-detectors 701a and 701b receive the reflected light from the disc to generate output signals respectively.

When the reflective surface of the disc 201 is perpendicular to the optic axis of the light emitter 701c, the quantities of reflected light received by the photo-detectors 701a and 701b are equal to each other. When the disc 201 is inclined, there occurs a difference in the quantities of reflected light received by the photo-detectors 701a and 701b. The error amplifier 702 receives both the output signals of the photo-detectors 701a and 701b and calculates the difference between the output signals to provide an error signal corresponding to the inclination of the disc.

The mechanism controller 703 converts this error signal with a pulse-width-modulated signal to provide it to a driving-circuit 704 which servo-controls a driving-motor 705 in a tilting device (not shown) for varying a tilt angle of the optical pickup device in such a manner that the intensities of the output signals of the tilt-sensors 701a and 701b are balanced.

The tilt-sensor 701 may be in general disposed adjacent to the optic axis of an objective lens for reading data and spaced from the axis in the truck direction in the optical pickup device in such a manner that a tilt-sensing light beam spot caused by the light emitter 701c goes ahead of the data detection point caused by the objective lens in the data-recorded-surface of the disc. When the light emitter is a LED, the diameter of the tilt-sensing light beam spot caused by the tilt-sensor is about 5 mm on the disc.

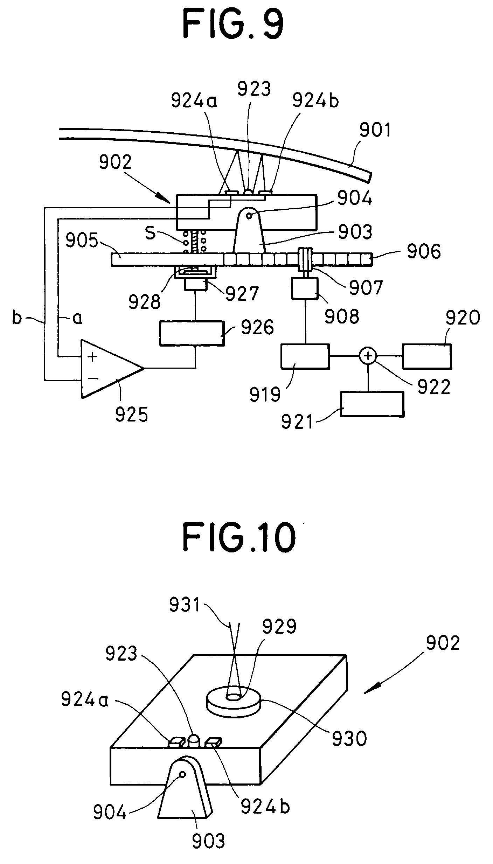

Fig. 9 shows in detail a positional relationship between the optical pickup device of Fig. 7 and the disc to be read. Fig. 10 partially illustrates the optical pickup device in the tilt-servo mechanism shown in Fig. 9. In Fig. 9, the disc 901 is deformed to incline to the horizon line or warped in the radial direction of the disc. For the purpose that the optical pickup device 902 may optically read the recorded data from such a deformed or warped disc, the housing of the pickup is pivotably supported by support members 903 and journaled via a pivot axis 904.

The support members are fixed to a slider 905. This slider 905 moves the optical pickup device 902 in the radial direction of the disc 901.

For example, the slider 905 comprises a rack gear 906 for engaging with a fixed pinion gear 907. The slider motor 908 rotates the pinion gear 907 and then the slider 905 travels in the radial direction of the disc. The rotation of the slider motor 908 is controlled by a driver circuit 919.

The tilt-servo mechanism further comprises; a usual sliding signal generator 920 for detecting a DC component included the error signal provided from a tracking error signal generator (not shown) and generating a usual sliding signal; and a fast sliding signal generator 921 for generating a fast sliding signal used for operations of searching or scanning the address of the recorded data or the like. These both signal generators provide their outputs through an adder 922 to the driver circuit 919 to control the slider motor 908.

The optical pickup device 902 includes the emitting element 923 and the light-receiving elements 924a and 924b for detecting the inclination of the disc 901. The output lines "a" and "b" of the light-receiving elements 924a and 924b are connected to a differential amplifier 925 which provides the differential output "c" to a driver circuit 926 which controls a tilting motor 927 fixed to the slider 905.

A male screw 928 is provided with the rotation shaft of the tilting motor 927. The male screw 928 is engaged with a female screw formed in the optical pickup device 902, so that the optical pickup device 902 is tilted with an incline angle in accordance with the rotation of the male screw 928 caused by the motor 927. The optical pickup device 902 therefore swings with respect to the pivot axis pivot axis 904 of the support member 903.

In addition, a spring S is provided around the male screw 928 between the optical pickup device 902 and the slider 905 to prevent any back-lash.

Fig. 10 is a schematic perspective view of the optical pickup device 902 in which numeral reference 929 denotes an objective lens. The objective lens 929 of the optical pickup device 902 converges the data-reading light beam emitted from the laser light source onto the data-recorded-surface of the disc 901 as a spot.

The center of the objective lens 929 is disposed at an intersection of the optic axis 931 of the light beam and the pivot axis 904. The objective lens 929 is controlled and moved in the direction of the optic axis 931 by the so-called focus actuator 930 comprising a magnetic circuit, a coil and the like in such a manner that the light beam is usually converged onto the data-recorded-surface.

A straight line passing between both the centers of the objective lens 929 and the emitting element 923 is nearly parallel to a tangential direction of the recording track during the reproduction of data. The emitting element 923 may be preferably disposed in such a manner that a light beam spot for the tilt-servo or tilt-sensing light beam spot 1106 caused by the light element goes ahead of the data detection point or spot 1105 caused by the objective lens in the data-recorded-surface of the disc during reading of the recorded data. This relation is shown in Fig. 11B.

On the other hand, the optical disc has in general the read-in zone indicating the program starting position, the program zone and the read-out zone indicating the program ending position. In addition, for example, CD has in general a discrimination label at a single side of the disc i.e., a paper label or a printing is put on the opposite side of the data-recorded-surface of the disc.

In the case of LD, such a discrimination label is put on around the central hole of the disc because of it's a large diameter of 30 cm or 20 cm. However, DVD or the like with a 12 cm diameter is not enough in the area to put a discrimination label on around the central hole. Therefore, as far as there is a margin at the periphery of the disc, the discrimination label may be pasted on the margin. The DVD is constructed of two adhered discs, i.e., a double sided disc in which data is recorded on both sides at a high density. In a high density and large capacity optical disc such as DVD or the like, a higher accuracy for reading the recorded data from the recording track in the optical pickup device is required in proportional to its high density of the disc.

In the reproduction of data from DVD above mentioned, an improved reading accuracy of the tilt-sensor is necessary. Particularly, when the width of the pit-train region for the program is smaller than a diameter of a tilt-sensing light beam spot on the disc used for the tilt-sensor, such a light spot covers the pit-train region and the mirror face or the label face and then the tilt-sensor fails to perform the normal operation because of non-uniform reflection from the disc.

### SUMMARY OF THE INVENTION

It is, therefore, an object of the invention to provide an optical disc capable of preventing such a mis-detection of the tilt-sensor.

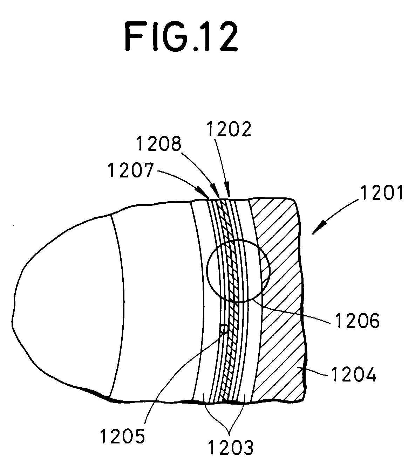

Namely, when the width of the program zone is extremity small as shown in Fig. 12, the tilt-sensor is influenced even at the read-in area by the label disposed at the outer periphery thereof, so that there may be a possibility that the mis-detection of a tilled angle of the disc occurs. The present invention may prevent such a mis-detection of the tilled angle of the disc. There is a high possibility of the mis-detection in the optical disc carrying the extremity short programs such as a computer software or the like. Further, the mis-detection may occur when recorded on one side is a continuation of a long program e.g., a motion picture or the like which is only longer than the capacity of the other side of the double sided disc.

The above object may be achieved by an optical disc including; a pit-train region having a read-in zone, a program zone and a read-out zone which are disposed outwards in turn on a data-recorded-surface; and a margin zone at an outer periphery of the pit-train region e.g., a label space, characterized in that pits are recorded in such a manner that a width of the pit-train region in a radial direction of the optical disc is larger than a diameter of a tilt-sensing light beam spot formed and used for a tilt-servo adjustment of an incline angle between an optic axis of a data-reading light beam and the data-recorded-surface.

In another aspect of the invention, an optical disc comprises; a pit-train region having a read-in zone, a program zone and a read-out zone which are disposed outwards in turn on a data-recorded-surface; and a margin zone at an outer periphery of the pit-train region, characterized in that a dummy pit-train zone is provided around the read-out zone on the margin zone; and in that the dummy pit-train zone has a width in a radial direction of the optical disc which is larger than a diameter of a tilt-sensing light beam spot formed and used for a tilt-servo adjustment of an incline angle between an optic axis of a data-reading light beam and the data-recorded-surface.

Since the pit-train region is expanded by the dummy pit-train zone or an extension read-out zone in such a manner that the outer peripherally of the expanded pit-train region exceeds to the end of the tilt-sensing light beam spot, even if the extremity short program data is read from such a disc, the tilt-sensor can receive the reflected light without any harmful influence from a label or the like similarly to do in the program zone.

Other and further features, advantages and benefits of the invention will become apparent in the following description taken in conjunction with the following drawings. It is to be understood that the foregoing general description and following detailed description are exemplary and explanatory but are not to be restrictive of the invention. The accompanying drawings which are incorporated in and constitute a part of this invention and, together with the description, serve to explain the principles of the invention in general terms.

### BRIEF DESCRIPTION OF THE DRAWINGS

Fig. 1 is a schematic perspective view illustrating an optical disc according to the invention;
Fig. 2 is a schematic partially cross-sectional view illustrating an optical disc according to the invention;
Fig. 3 is a schematic diagram illustrating an apparatus for forming or recording pits on an optical disc according to the invention;
Figs. 4A and 4B are a schematic plan view and a partially enlarged plan view of the optical disc of Fig. 3 respectively;
Fig. 5 is a flowchart showing an operation of the apparatus for forming or recording pits shown in Fig. 3;
Figs. 6A, 6B and 6C are a schematic partially cross-sectional view, a partially broken plan view and a partially enlarged broken plan view illustrating an optical disc according to the invention respectively;
Fig. 7 is a block diagram showing a structure of device for a tilt-servo control;
Fig. 8 is a schematic cross-sectional view illustrating a tilt-sensor;
Fig. 9 is a schematic cross-sectional view illustrating a tilt-servo mechanism;
Fig. 10 is a schematic perspective view illustrating an optical pickup device in the tilt-servo mechanism shown in Fig. 9;
Figs. 11A and 11B are partial enlarged broken plan views illustrating the outer and internal peripheries of the optical disc respectively; and
Fig. 12 is a partially enlarged broken plan view illustrating an optical disc.

### DESCRIPTION OF THE PREFERRED EMBODIMENTS

The embodiments according to the present invention will be described in more detail with reference to the accompanying drawings.

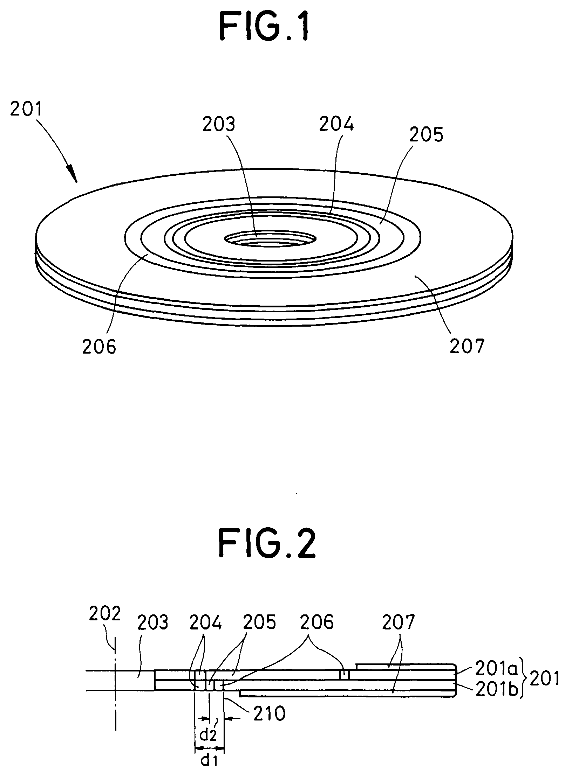

Fig. 1 shows an embodiment of an optical disc as a schematic perspective view. Fig. 2 shows a schematic cross-sectional view of the same. In Figures, an optical disc 201 is a DVD of a double-sided disc consisting of a pair of disc substrates 201a and 201b adhering to each other. The disc substrate is made of e.g., PMMA with an Al reflective film. The disc has a central hole 203 about a disc centerline 202. In each side of the disc, a read-in zone 204, a program zone 205 and a read-out zone 206 are formed in turn from the central hole towards the outer peripherally, and further a label 207 is provided around the read-out zone 206. The central hole 203 has a diameter of 15 mm, and the diameter of the disc is 120 mm. The read-in zone 204, the program zone 205 and the read-out zone 206 a pit-train region make up a pit-train region in which a plurality of pits are formed on the reflective film.

Numeral reference 210 denotes a tilt-sensing light beam spot formed on the disc 201a which is used for a tilt-servo adjustment of the pickup of an incline angle between an optic axis of a data-reading light beam and the data-recorded-surface. Numeral reference d2 denotes a diameter of the tilt-sensing light beam spot. Numeral reference d1 denotes a width of the pit-train region in the radial direction of the disc.

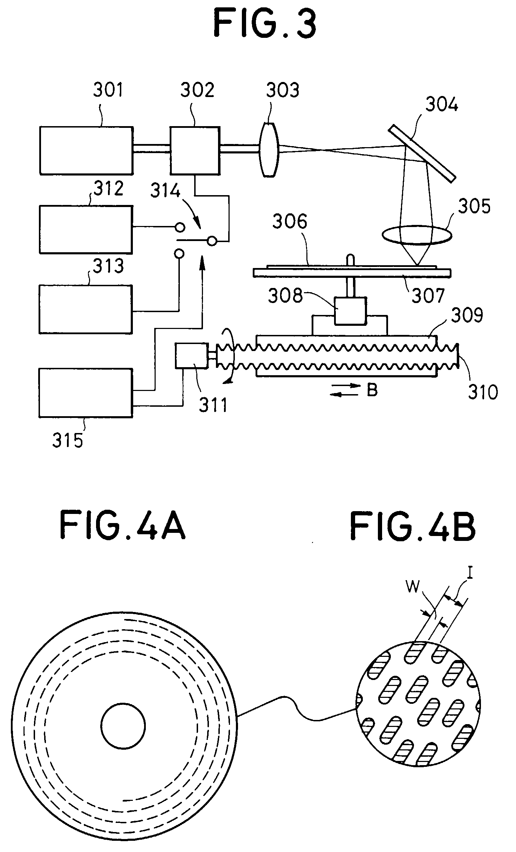

Fig. 3 illustrates an example of an apparatus for forming a pit-train region on a disc substrate of the optical disc of the invention. Numeral reference 301 denotes a light source such as a laser or the like. Numeral reference 302 denotes a light modulator for modulating an emitted light from the laser into a pulse beam in accordance with an input signal of data to be recorded. Numeral reference 303 denotes a projection lens for enlarging a diameter of an incident light beam and then projecting it to a lens 305. Numeral reference 304 denotes a reflecting mirror for deflecting the direction of light-path. Numeral reference 305 denotes an objective lens of a microscope system which irradiates and converges the incident light beam onto the disc substrate 306 as a minute light spot to record the data on a resist material film on the substrate.

The distance between the disc substrate 306 and the objective lens 305 is kept by a well known focus servo at an accuracy of plus or minus one micrometers. Numeral reference 307 denotes a turntable. Numeral reference 308 denotes a motor for rotating the turntable carrying the disc substrate 306. Numeral reference 309 denotes a supporting device for supporting the motor. Numeral reference 310 denotes a screw shaft for gradually transporting the supporting device 309 with the motor towards arrow B directions. The screw shaft engages with the corresponding screw provided in the supporting device 309.

Numeral reference 311 denotes a motor for rotating the screw shaft. Numeral reference 312 denotes a data signal generator which provides a signal to be recorded on the disc. Numeral reference 313 denotes a dummy signal generator. Numeral reference 314 denotes a switch for switching these signals. Numeral reference 315 denotes a CPU (central processing unit) for controlling the switch 314 in accordance with the result from the calculation based on both the rotation signals supplied from the motor 311 and the radius data of screw pitches of the screw shaft 310.

As shown Fig. 4A, the recording truck comprises a plurality of pits spirally recorded or formed from an internal or outer periphery correspondingly to signals to be recorded in the optical disc by the recording device above mentioned. Fig. 4B shows an enlarged view of the recording format of the disc in which dark portions imply light-irradiated portions. Generally, the signal pits are recorded with a high density in which the truck pitch "I" is in a ranging from 0.7 to 2 micrometers and the truck width "W" is in a ranging from 0.3 to 1 micrometers.

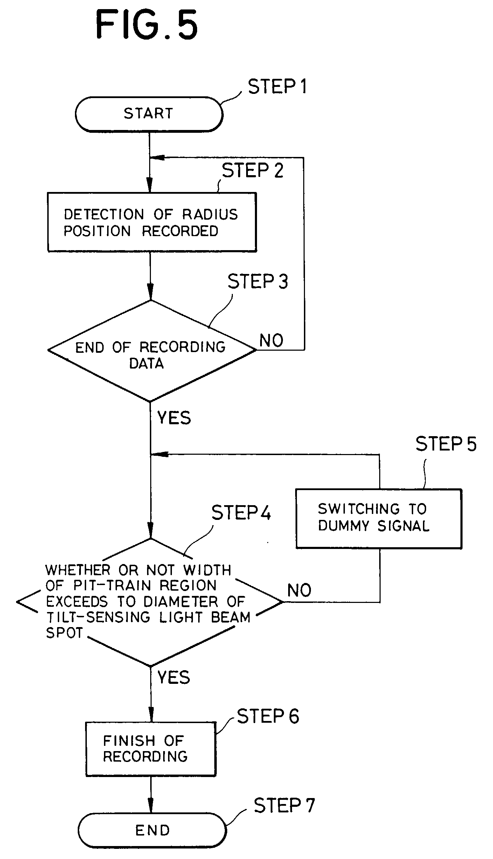

After the end of the data signal to be recorded, the CPU acquires the radius position of the end and then switches the switch 314 from the data signal generator 312 to the dummy signal generator 313 to record a dummy signal on the disc to make a dummy pit-train zone thereon in such a manner that the width of the dummy pit-train zone becomes larger than the predetermined diameter of the tilt-sensing light beam spot in the radial direction of the disc. For example, in the case that the diameter of the tilt-sensing light beam spot is 5 mm, the recording of the dummy signal is terminated when the width of the dummy pit-train zone in the radial direction becomes 5 mm. A flowchart showing this operation is illustrated in Fig. 5.

Fig. 5 illustrates the flowchart showing the operation of the CPU 315 in the recording device in which a dummy pits are recorded in the truck. In this figure, the process forward from the start of the step 1 to the step 2 and then, the CPU 315 usually detects the radius position of the truck at that present time on basis of both the rotation signals supplied from the motor 311 and the radius data of screw pitches of the screw shaft 310. The judgment whether or not the predetermined data to be recorded is terminated is performed in the step 3. If the recording data is not terminated then the process returns to the step 2.

If the recording data is terminated in the step 3 then the process advances next to the step 4 in which the judgment whether or not the amount of recorded data suffices the condition that the width of the pit-train region becomes larger than the predetermined diameter of the tilt-sensing light beam spot in the radial direction of the disc. In the step 4, if the width of the pit-train region is less than the predetermined diameter of the tilt-sensing light beam spot then the process advances next to the step 5 in which the CPU switches the switch 314 from the data signal generator 312 to the dummy signal generator 313 to record a dummy signal on the disc and holds this condition until the width of the pit-train region is equal to or more than the predetermined diameter of the tilt-sensing light beam spot to make a dummy pit-train zone on the disc. After that, if the width of the pit-train region in the radial direction exceeds to the diameter of the tilt-sensing light beam spot then the process advances next to the step 6 in which the CPU finishes the recording of data for the step 7.

Even when the data-reading light beam is irradiated on the most internal peripheral portion of the disc fabricated through the above mentioned way, the mis-detection is prevented according to the invention. This is because the tilt-sensing light beam spot usually exists on the pit-train region of the recorded track, so that the uniform reflected light may be utilized for the tilt-servo mechanism.

In addition to the irradiated tilt-sensing light beam spot existing on the most internal peripheral portion, a similar mis-detection of the tilt-sensor may occur when the data-reading light beam reads the recorded data at the most outer peripheral portion of the pit-train region where several data are recorded on the disc.

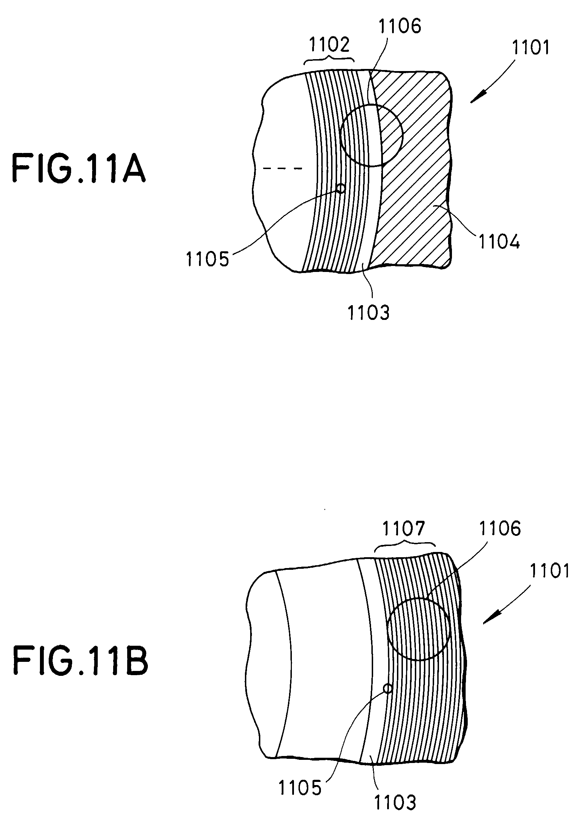

In other words, such a mis-detection at the most outer peripheral portion of the disc is explained in the partial enlarged broken plan view illustrating the outer peripheral portion or a label portion 1104 of the disc 1101 as shown in Fig. 11A. There is a mirror face 1103 disposed between the read-out zone 1102 and the label portion 1104 at the most outer peripheral portion of the disc. The irradiated tilt-sensing light beam spot 1106 exists over the read-out zone 1102, the mirror face 1103 and the label portion 1104, although the data detection spot 1105 still reads-out the truck or pits in the read-out zone 1102. The read-out zone 1102, the mirror face 1103 and the label portion 1104 have different reflectivities from each other. Therefore, the tilt-sensor enters the mis-detection state since the tilt-sensing light beam spot 1106 overlapping the label portion 1104 and the mirror face 1103 provides non-uniform reflected light to the receivers of the tilt-sensor.

Such a mis-detection at the most outer peripheral portion of the disc may be prevented by the invention. The irradiation range of the tilt-sensing light beam spot in the outer side depends on the arrangement of the tilt-sensing light beam spot and the irradiated data-reading light beam spot. By using such a relationship, after the end of the recorded data the loop of steps 4 and t after the step 3 is performed as shown in of the flowchart of Fig. 5 until the above conditions are satisfied, so that a dummy truck data is recorded.

According to the invention, the ion is prevented even if the data-reading light beam exists in the most internal or outer periphery, because the tilt-sensing light beam spot usually exists on the recorded track or pits portion and the tilt-sensor receives a uniform reflected light.

On the other hand, the possibility of the mis-detection of the tilt-sensing light beam spot performed at a portion adjacent to the read-out zone is dissolved by a method as disclosed in the Japanese patent publication No. 3-13864. In such a method, the tilt-servo is turn off before the tilt-sensor detects the mirror face portion, and then the operation of the optical pickup device is continued while the tilted angle as it is at this time is kept. The invention prevents the tilt-mis-detection in the optical pickup device which does not use such a method.

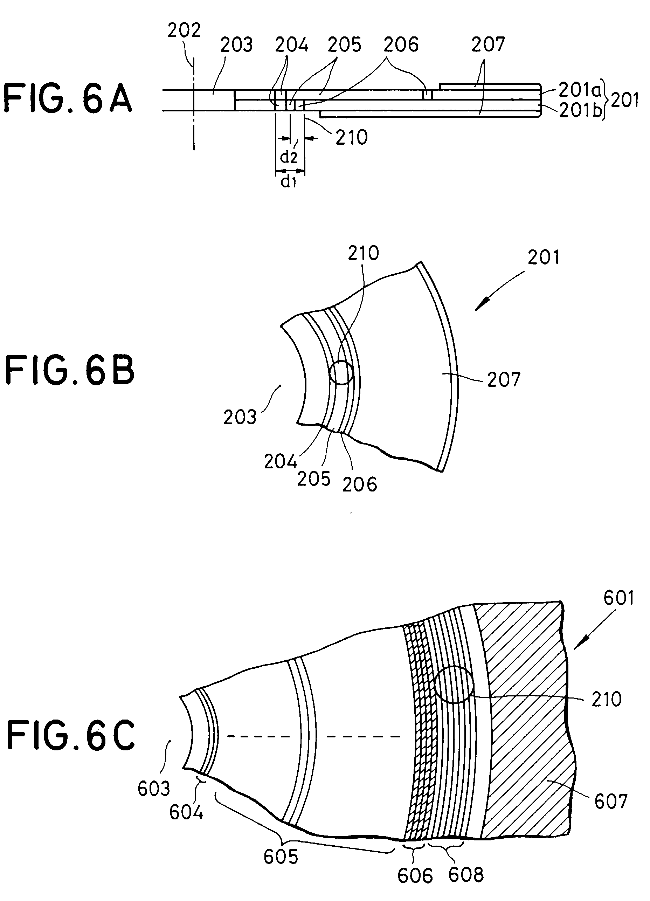

Figs. 6A, 6B and 6C are a schematic cross-sectional view, a partial broken plan view and a partial enlarged broken plan view of the optical disc according to the invention respectively. As seen from Fig. 6C, a dummy truck zone 608 for the tilt-servo system is provided at the outer side of the read-out zone 606. The dummy truck zone 608 comprises the pit-train carrying meaningless pits excepting the effectiveness for the tilt-sensor.

In addition to the dummy pit-train zone to follow the read-out zone being provided, the read-out truck may be continuously expanded or recorded instead of the dummy pit-train zone. The label 207 as shown in Fig. 2 is generally made of a paper, a plastic film or the like, but it may be a direct printing on the disc. Alternatively, the label may be provided as a visible pattern similar to pits. The read-out zone or the dummy truck zone may be expanded to the label face portion as far as the d1 is larger than the d2. While counting the recorded track from the start of the read-in zone to the end of the read-out in the disc recording operation, after the read-out zone a dummy truck is recorded until the converted width of the pit-train region in the radial direction exceeds to the predetermined diameter of the tilt-sensing light beam spot. In this way, the dummy truck zone 608 is easily formed on the disc.

Moreover, it is apparent that the invention may be applied in a case that the predetermined data is recorded on the disc by means of the recording and reproducing device.

As mentioned above, the optical disc of the invention prevents the mis-detection of the tilt-sensor other than the pit-train region in the reproducing device for reproducing the data from the high density optical disc medium, so that a stable operation for the reproduction is achieved.

For example, as shown in Fig. 2, the mis-detection of the tilt-sensor is prevented in such a manner that the width d1 of the pit-train region in the radial direction is larger than the diameter d2 of the tilt-sensing light beam spot 210. Namely, even if the program zone 205 is extremity short, the present invention obtains an enough area for the tilt-sensing light beam spot since the read-out zone 206 is expanded or the dummy truck zone 608 is formed where the d1 is larger than d2 (also in Fig. 6A).

## Claims

1. An optical disc comprising; a pit-train region having a read-in zone, a program zone and a read-out zone which are disposed outwards in turn on a data-recorded-surface; and a margin zone at an outer periphery of the pit-train region, characterized in that pits are recorded in such a manner that a width of the pit-train region in a radial direction of the optical disc is larger than a diameter of a tilt-sensing light beam spot formed and used for a tilt-servo adjustment of an incline angle between an optic axis of a data-reading light beam and the data-recorded-surface.

2. An optical disc comprising; a pit-train region having a read-in zone, a program zone and a read-out zone which are disposed outwards in turn on a data-recorded-surface; and a margin zone at an outer periphery of the pit-train region, characterized in that a dummy pit-train zone is provided around the read-out zone on the margin zone; and in that the dummy pit-train zone has a width in a radial direction of the optical disc which is larger than a diameter of a tilt-sensing light beam spot formed and used for a tilt-servo adjustment of an incline angle between an optic axis of a data-reading light beam and the data-recorded-surface.
